# EUROPEAN PATENT APPLICATION

(11) **EP 4 807 502 A1**
(43) Date of publication of application: **16.09.2026**
(21) Application number: 25305322.7
(22) Date of filing: 12.03.2025
(51) Int. Cl.: G06F 3/01

(54) **METHOD AND APPARATUSES TO HIDE REAL ELEMENTS IN AN EXTENDED REALITY SESSION**

(71) Applicant: InterDigital CE Patent Holdings, SAS, 75017 Paris (FR)
(72) Inventor: JOUET, Pierrick, 35000 RENNES (FR); HIRTZLIN, Patrice, 35830 BETTON (FR); FONTAINE, Loic, 35530 NOYAL SUR VILAINE (FR); FAIVRE D'ARCIER, Etienne, 35750 SAINT GONLAY (FR); LELIEVRE, Sylvain, 35760 MONTGERMONT (FR); HAMZA, Ahmed, COQUITLAM, V3J 3X5 (CA)
(74) Representative: Vossius & Partner Patentanwälte Rechtsanwälte mbB

(57) **Abstract**

In an example method, a set of functions to be performed in an extended reality, XR, session is determined, set including an inpainting function, a masking function, and/or a shadow removal function. A user equipment, UE, sends a capabilities message to an application server. The capabilities message indicates, for each of the functions, whether the UE has a capability to perform the respective function. The server sends to the UE an assignment message indicating, for each function, whether the UE or the application server is assigned to perform the respective function. A set of objects to be removed from a scene is determined, and an XR session is provided in which the determined set of objects are removed from the scene. In providing the session, the functions of the set of functions are performed according to the assignment message.

## Description

### BACKGROUND

The present disclosure relates to a User Equipment (UE) operating as an Extended Reality (XR) device/node in variety of form factors. A typical UE (e.g., XR UE) may include, but is not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be used based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any XR applications/experience/services.

### SUMMARY

Briefly stated, in one embodiment, a method is performed at an extended reality, XR, user equipment, UE. The method comprises: in communication with an application server, determining a set of functions to be performed in an extended reality session, the set of functions including at least one of an inpainting function, a masking function, and a shadow removal function; sending, from the UE to the application server, a capabilities message indicating, for each of the functions in the set of functions, whether the UE has a capability to perform the respective function; receiving, from the application server, an assignment message indicating, for each of the functions of the set of functions, whether the UE or the application server is assigned to perform the respective function; in communication with the application server, determining a set of objects to be removed from a scene; and providing an extended reality session in which the determined set of objects are removed from the scene, the functions of the set of functions being performed according to the assignment message.

An extended reality, XR, user equipment, UE, apparatus according to some embodiments comprises one or more processors configured to perform at least: in communication with an application server, determining a set of functions to be performed in an extended reality session, the set of functions including at least one of an inpainting function, a masking function, and a shadow removal function; sending, from the UE to the application server, a capabilities message indicating, for each of the functions in the set of functions, whether the UE has a capability to perform the respective function; receiving, from the application server, an assignment message indicating, for each of the functions of the set of functions, whether the UE or the application server is assigned to perform the respective function; in communication with the application server, determining a set of objects to be removed from a scene; and providing an extended reality session in which the determined set of objects are removed from the scene, the functions of the set of functions being performed according to the assignment message.

According to some embodiments, a method is performed at an extended reality, XR, application server. The method comprises: in communication with a user equipment, UE, determining a set of functions to be performed in an extended reality session, the set of functions including at least one of an inpainting function, a masking function, and a shadow removal function; receiving, from the UE, a capabilities message indicating, for each of the functions in the set of functions, whether the UE has a capability to perform the respective function; sending, to the UE, an assignment message indicating, for each of the functions of the set of functions, whether the UE or the application server is assigned to perform the respective function; in communication with the UE, determining a set of objects to be removed from a scene; and providing an extended reality session in which the determined set of objects are removed from the scene, the functions of the set of functions being performed according to the assignment message.

An extended reality, XR, application server apparatus according to some embodiments comprises one or more processors configured to perform at least: in communication with a user equipment, UE, determining a set of functions to be performed in an extended reality session, the set of functions including at least one of an inpainting function, a masking function, and a shadow removal function; receiving, from the UE, a capabilities message indicating, for each of the functions in the set of functions, whether the UE has a capability to perform the respective function; sending, to the UE, an assignment message indicating, for each of the functions of the set of functions, whether the UE or the application server is assigned to perform the respective function; in communication with the UE, determining a set of objects to be removed from a scene; and providing an extended reality session in which the determined set of objects are removed from the scene, the functions of the set of functions being performed according to the assignment message.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1A is a functional block diagram of a Type 2: 5G EDGe-Dependent AR (EDGAR) UE, which may be used in some embodiments.
FIG. 1B is a functional block diagram of a cloud/edge server that may be used in some embodiments in cooperation with a UE as shown in FIG. 1A.
FIG. 2 is a call flow diagram for an XR Spatial Compute Pipeline that may be used in some embodiments.
FIG. 3 is a flow diagram illustrating different configurating outcomes that arise in different scenarios for different capabilities of the UE according to an example embodiment.
FIG. 4 is a call flow diagram illustrating a configuration call flow in an embodiment in which the server sends the required tasks.
FIG. 5 is a call flow diagram illustrating a configuration call flow in an embodiment in which the UE sends the required tasks.
FIGs. 6A-6G are call flow diagrams illustrating the exchange of information between a UE and a server during the runtime of an XR session under different configuration conditions.
FIG. 7 is a flow diagram illustrating a method performed by a UE according to some embodiments.
FIG. 8 is a flow diagram illustrating a method performed by an application server according to some embodiments.
FIG. 9 is a functional block diagram of a computing system that may be used to implement -a UE or an application server according to example embodiments.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

### Overview of diminished reality

Diminished Reality is a mechanism that hides reality components from the viewer's perspective. Unwanted elements are recognized and replaced by other image elements, creating a plausible and consistent overall impression for the viewer.

In-Painting-DR (Diminished Reality) is a technique in which parts of a scene are reconstructed or "painted over" using information in the source image such as textures and colors around the object or the area to be reduced. In one method of removing targets from videos or images, the missing regions are filled in by using readily available background images or essential information captured beforehand. In another technique, the information around the target or the similarity of textures are used to artificially produce the filling content, e.g. using a deep learning technique, an approach also known as image inpainting.

The segmented 3D model of a real scene can be used to select and mask target objects, as described for example in Kobayashi, K. and Takahashi, M., "Real-Time Diminished Reality Application Specifying Target Based on 3D Region," Virtual Worlds 2024, 3, 115-134.

Deep learning allows for the selection of element in an image, as described for example in Ronny Velastegui et al., "Image semantic segmentation of indoor scenes: A survey," Computer Vision and Image Understanding, Volume 248, 2024, 104102, ISSN 1077-3142. The masked area is filled with background information, selected objects can then be hidden.

The Inpainting of 3D regions of a real scene is now a well-known process, as described in, for example, Kira Prabhu et al., "Inpaint3D: 3D Scene Content Generation using 2D Inpainting Diffusion," arXiv:2312.03869, 2023. Neural Radiance Fields (NeRF) is one technique that can be used to implement this process.

Inpainting 2D regions of a scene is also a well-known process. Some techniques make use of Fourier convolutions, as described for example in Roman Suvorov et al., "Resolution- robust Large Mask Inpainting with Fourier Convolutions," arXiv:2109.07161, 2021. Other techniques make use of latent diffusion models (LDMs), as described for example in Robin Rombach et al., "High-Resolution Image Synthesis with Latent Diffusion Models," arXiv:2112.10752, 2022.

When an object of a scene is hidden, it may be helpful to hide its shadow to bring more realism. The shadow removal on an image (2D) is now a well-known process that may be implemented using diffusion models, as described for example in Kangfu Mei et al., "Latent Feature-Guided Diffusion Models for Shadow Removal," WACV 2024. Knowledge of the 3D model of the real environment and real light parameters can help guide the shadow removal process, as described for example in Edward Zhang et al, "No Shadow Left Behind: Removing Objects and their Shadows using Approximate Lighting and Geometry," arXiv:2012.10565, 2020; also described at https://ed.ilogues.com/research/2020/12/21/no-shadow-left-behind-removing-objects-and-their-shadows-using-approximate-lighting-and-geometry. When the shadow is detected, its hiding can be seen as an inpainting process. As shadows can originate from occlusions in direct illumination, it is helpful to use information about the related real light sources for the shadow removal process.

### Overview of 3D models, segmentation, and labelling

A 3D model of a real environment can be used to check collisions and occlusions and to correctly position shadows and virtual objects.

The 3D model of a real scene can be extracted from images of the environment, captured by an RGB camera, from different points of view (e.g. with structure-from-motion techniques).

The labeling and segmentation may be performed from a textured mesh. It provides a segmented 3D model. In a segmented 3D model, each element/object can be accessed individually. For instance, thanks to the labeling of each object, all the chairs in the scene can be selected.

In XR applications, a scene description is used to combine an explicit and easy-to-parse description of a scene structure and some binary representations of media content. Typical scene description languages like gITF allow the description of light sources of different types. A scene description can be used to transmit the 3D model of a real environment and light information.

An AR application generally aims to perform a seamless insertion of virtual content into the user's real environment. It makes use of the Anchor, Trackable and XR Space concepts as defined in the 3GPP TS 26.119.

An anchor is a virtual element for which its position, orientation, scale and other properties are expressed in the trackable space defined by a trackable. A virtual asset's position, orientation, scale and other properties are expressed in relation to an anchor.

A trackable is a real-world object that can be tracked by the XR runtime. Each trackable provides a local reference space, also known as a trackable space, in which an anchor can be expressed.

An XR space is a frame of reference in which 3D coordinates are expressed. The pose of the 3D Model is relative to a XR space. Generally, this XR space is related to a trackable space.

### Overview of XR in 3GPP

A 3GPP technical report (TR), 3GPP TR 26.819, is a study on Spatial Computing for Augmented Reality (AR) Services. XR spatial computing encompasses a set of functions which process sensor data to generate information about the world 3D space surrounding the AR user. These include functions such as relocalization (establishing the position of users and objects within that space), anchoring, 3D Model construction, segmentation and labeling (semantic perception) and light extraction, which may be achieved through a combination of advanced sensors, cameras, and algorithms that enable devices to understand and interact with the three-dimensional space around them.

The output of spatial computing is spatial mapping information that is organized in a data structure called the XR Spatial Description for storing and exchanging the information. Some spatial computing functions may also take an XR spatial description and may result in updates to the XR spatial description. Spatial computing functions typically include data exchange and require a network architecture.

The spatial computing functions can run locally on the AR device or can be executed remotely on the cloud or on the edge in a spatial computing server accessed through dedicated interfaces as detailed in TR 26.298. Hiding of an object can be added to the set of spatial computing functions.

Technical Report TR 26.998, "Support of 5G Glass-type Augmented Reality / Mixed Reality (AR/MR) devices" addresses 5G Edge dependent AR UE (3GPP EDGAR). Use cases for which the data will be transmitted to the server (Up Link) include split computing (extraction on the server side) and shared experiences (more than one user, extraction is done by one user, the result is sent by the server to others). Shared experience is also applicable to 3GPP stand-alone.

Extraction of scanned data to build a 3D model is a part of XR Spatial Compute. 3GPP EDGAR encompasses this process.

XR Spatial Compute relates to AR functions which process sensor data to generate information about the world 3D space surrounding the AR user. It includes functions such as SLAM for spatial mapping (creating a map of the surrounding area) and localization (establishing the position of users and objects within that space), 3D reconstruction and semantic perception.

Spatial computing includes functions such as tracking (to estimate the movement of the AR device at a high frequency), relocalization (to estimate the pose of the AR device), mapping (to reconstruct the surrounding space), and semantic perception (to process the captured information into semantical concepts). The resulting output of spatial computing is a set of spatial mapping information that is organized in a data structure called the XR Spatial Description for storing and exchanging the information.

The 3GPP TSG SA WG4 (SA4) has studied different architectures for enabling XR experiences. Different degrees of split workflow between the AR devices and the Cloud/Edge have been defined in the TR 26.998, "Support of 5G Glass-type Augmented Reality / Mixed Reality (AR/MR) Devices."

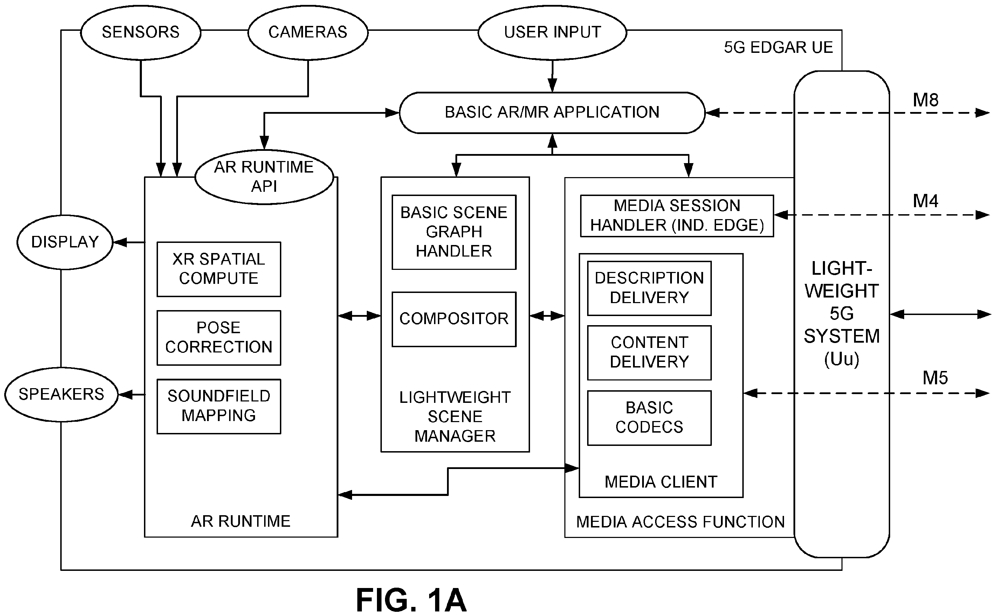

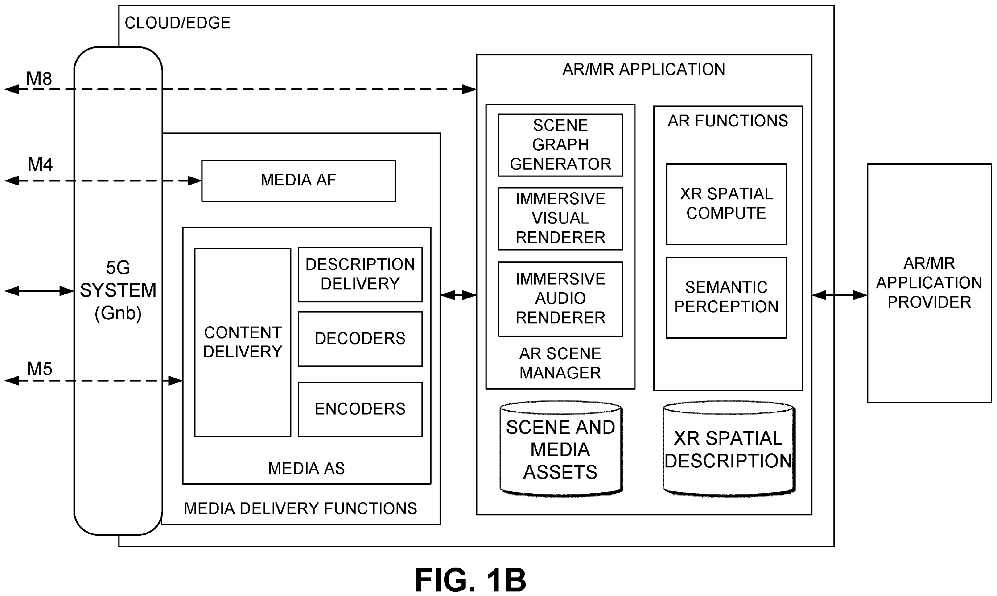

The SR_MSE (TS 26.565 "Split Rendering Media Service Enabler") relies on the 5G Edge dependent AR UE (EDGAR) architecture as shown in FIGs. 1A-1B, where most of the XR functions, especially the rendering, are performed on the Cloud/Edge. FIG. 1A is a functional block diagram of a Type 2: 5G EDGe-Dependent AR (EDGAR) UE, which may be used in some embodiments. FIG. 1B is a functional block diagram of a cloud/edge server that may be used in some embodiments in cooperation with a UE as shown in FIG. 1A.

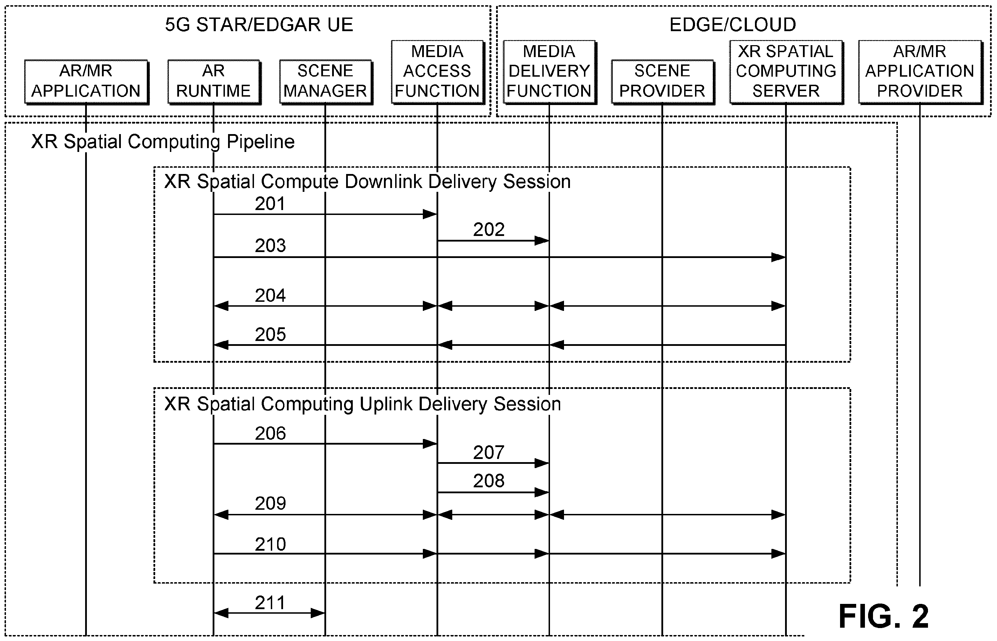

FIG. 2 is a call flow diagram illustrating an XR Session setup and XR Spatial Computing in an Edge/Cloud server. For a XR Spatial Compute downlink delivery session, at 201, the XR Spatial Compute function in the AR Runtime asks the media access function (MAF) to establish an XR Spatial Compute downlink delivery session. At 202, the MAF communicates with the network to establish the proper resources and QoS. At 203, the XR Spatial Compute function requests access to XR Spatial Description information. At 204, an XR Spatial Description downlink delivery session is established across the XR Spatial Computing server, the media delivery function, the media access function and XR Spatial Compute function on the device. At 205, XR Spatial Description information is delivered in this downlink delivery session.

For an XR Spatial Compute uplink delivery session, at 206, the XR Spatial Compute function in the AR Runtime asks the MAF to establish a XR Spatial Compute uplink delivery session. At 207, the MAF communicates with the network to establish the proper resources and QoS. At 208, the MAF establishes an appropriate uplink delivery pipeline. At 209, an XR Spatial Description uplink delivery session is established across the XR Spatial Compute function on the device, the media access function, the media delivery function and the XR Spatial Computing server. At 210, XR Spatial computing information is upstreamed to the XR Spatial Computing server. At 211, data is continuously exchanged between the Scene Manager and the AR Runtime.

### Configuration information for environment and lighting models

Example embodiments implement the exchange of scanned data that represents the real environment of an extended reality scene. The exchange of scanned environment data may be performed as described in European Patent Application No. 24305454.1, filed 26 March 2024, entitled "Processing Management of Real Environment Data in Extended Reality Applications," or using other techniques. That disclosure includes descriptions of the transmission of scanned data or raw data over a network from a User Equipment (UE) to a server. In particular, it relates to UE configuration and architectures. As described in that disclosure, the following configuration information may be provided for the exchange of data such as a 3D Model and a Segmented3DModel.

| **Name** | **Format** | **Cardinality** | **Description** |
|---|---|---|---|
| xrSpace | ID | 1..1 | Format of the XRSpace used to express the 3D Object |
| If (3DModelType ==NON_SEGMENTED){ | | | |
| 3DModel | Object | 1..1 | Format of the 3D Model defined in Table 1. |
| } | | | |
| If(3DModelType ==SEGMENTED){ | | | |
| Segmented3DModels | Array | 1..1 | Format of the set of Segmented3DObject. |
| Segmented3DModel | Object | 0..1 | Format of the Segmented3DModel defined in Table 2 |
| } | | | |

The following Table 1 illustrates an example of a 3DModel Object Format

**Table 1: 3DModel Object Format**

| **Name** | **Format** | **Cardinality** | **Description** |
|---|---|---|---|
| RawMesh | Mesh (or Point Cloud) | 1..1 | Format of RawMesh (scan of the scene) |
| RawTexture | Texture / atlas | 0..1 | Format of the RawTexture |
| timestamp | time information | 0..1 | Format of timestamp (associated to 3D Model generation). Time information can be a string (date:time AAAA:MM:JJ:HH:MN:SS:MS) or a number |
| Complete | bool | 0..1 | Indicate if the scan is complete or partial |

In one embodiment, only one texture (atlas) is transmitted. Table 2 describes the content of a message that may be used to describe the format of a segmented 3D model.

**Table 2:Segmented3DModel Object Format**

| **Name** | **Format** | **Cardinality** | **Description** |
|---|---|---|---|
| type | String | 1..1 | Format of the label of the segmented object |
| referenceld | number | 1..1 | Format of the unique ID of the 3D object |
| mesh | Mesh | | Format of mesh (associated with the segmented object). |
| image | Texture | 0..1 | Format of image (Texture associated to the segmented object) |
| size | Vec2 | 1..1 | Format of the size of the texture |
| timestamp | time information | 0..1 | Format of the timestamp (associated to segmentation process). Time information can be a string (date:time AAAA:MM:JJ:HH:MN:SS:MS) or a number |

Some embodiments make use of real light data in the real environment of an extended reality scene. The transmission of light data or raw data over a network from a User Equipment (UE) to a server may be performed as described in European Patent Application No. 24315194.1, filed 19 April 2024, entitled "Method to Manage Light Data," or using other techniques. The cited application relates to UE configuration and architectures. The following table provides an example of configuration information for the exchange of light data.

| **Name** | **Format** | **Cardinality** | **Description** |
|---|---|---|---|
| xrSpace | ID | 1..1 | Format of the XRSpace used to express the 3D Object |
| Lights | Array | 1..1 | Format of the set of light objects |
| LightObject | Object | 0..n | Format of the Light object defined in Table 3. |

Table 3 provides an example of a light object format that may be used in some embodiments.

**Table 3: Light object format**

| **Name** | | **Format** | **Cardinality** | **Description** |
|---|---|---|---|---|
| type | | enum | | Format for the type of the light (Table 3) |
| If (type== **PointLight){** | | | | |
| | pose | Array (16 floats) | 1..1 | Format of the pose of the light. |
| | color | Vec3f | 0..1 | Format of color (RGB value) |
| | temperature | float | 0..1 | Format of Temperature value |
| | Intensity | float | 1..1 | Format of Intensity value |
| | range | float | 0..1 | Format of Range value |
| } | | | | |
| If (type==Spotlight){ | | | | |
| | pose | Array (16 floats) | 1..1 | Format of the pose of the light. |
| | color | Vec3f | 0..1 | Format of color (RGB value) |
| | temperature | float | 0..1 | Format of Temperature value |
| | Intensity | float | 1..1 | Format of Intensity value |
| | innerConeAngle | float | 0..1 | Format of Angle(radians) |
| | outerConeAngle | float | 0..1 | Format of Angle, in radians (spot only) |
| } | | | | |
| If (type == **DirectionalLight){** | | | | |
| | direction | Vec3f | 1..1 | Format of Direction of the light) |
| | color | Vec3f | 0..1 | Format of color (RGB value) |
| | temperature | float | 0..1 | Format of Temperature value |
| | Intensity | float | 1..1 | Format of Intensity value |
| } | | | | |
| If(type == **AreaLight){** | | | | |
| | pose | Array (16 floats) | 1..1 | Format of the pose of the light. |
| | color | Vec3f | 0..1 | Format of color (RGB value) |
| | temperature | float | 0..1 | Format of Temperature value |
| | Intensity | float | 1..1 | Format of Intensity value |
| | Texturet / Image | Texture | 1..1 | Texture associated with the light. Can be image or video |
| | Format | enum | 1..1 | These may be: IMAGE or VIDEO. |
| | Shape typet | enum | 1..1 | These may be: RECT, DISK, or SPHERE. |
| | If(Shape type =RECT){ | | | |
| | width | float | 1..1 | Format of width |
| | height | float | 1..1 | Format of height |
| | } | | | |
| | If(Shape Type = DISK){ | | | |
| | radiusFormat | float | 1..1 | Format of radius |
| | } | | | |
| If(Shape Type =SPHERE){ | | | | |
| | radiusFormat | float | 1..1 | Format of radius |
| | } | | | |
| } | | | | |
| If(type == **EnvLight){** | | | | |
| ImageProjectionType | | enum | 1..1 | Format of ImageProjectionType. These may be CUBEMAP or EQUIRECTANGULAR |
| | rotation | Vec4f | 1..1 | Format of rotation of the IBL environment. (Quaternion) |
| | intensity | float | 0..1 | Format of Brightness multiplier for environment. |
| | SphericalHarmonic | Array (27floats) | | Format of spherical harmonic coefficients for irradiance up to I=2. This is a 9x3 array |
| | Textures/ Images | Array of Textures | | Format of Cube Map: An array of 6 images/ video, one for each cube face or Equirectangular image |
| | Size | Vec2f | | Format of the size of the image |
| } | | | | |

### Issues addressed in some embodiments

For specific use cases, it may be desirable to hide some parts of the real environment from the user's viewpoint. For instance, a user may want to position a virtual model of a table in his living room to replace the existing one. A user may want to clear away real objects from a table so that a virtual model can be positioned on the table. A user may wish to replace all the furniture in their living room with other furniture from a virtual catalog.

The current 3GPP specifications do not provide for call flow and related messages that could be used to signal that some parts of the real environment should be hidden during the AR experience. Depending on the device capabilities, it may be desirable for the application to delegate the computation of the inpainting process to a server. Therefore, example embodiments provide a mechanism to configure, capture, format and transmit data for inpainting processes.

### Overview of example embodiments

In an XR application, through its equipment, a user sees virtual object added to the real environment. In some cases, it may be desirable for the application to remove or hide some elements of the real environment to offer a better XR experience.

The process of hiding/removing real elements includes detecting and masking selected objects and applying an inpainting process to the masking volume or area. In some cases, the process may include the removal of shadows cast by the objects. This mechanism is generally known as diminished reality (DR).

The present disclosure provides a mechanism to hide real elements. Example embodiments include an initialization phase in which some configuration parameters are retrieved. Then, in a configuration phase, the data format and the assignment of the tasks are defined. Subsequently, the exchange of data (sensor data, additional data such as masking information) is performed over a network between a User Equipment (UE) and an application server (AS). Example embodiments may be implemented using any of several different types of UE architecture. Some embodiments are implemented using a lightweight eXtended Reality (XR) user equipment (UE) requiring the delegation of masking, inpainting and shadow removal tasks to the server. Some embodiments are implemented using an advanced UE capable of handling some tasks locally but requiring the delegation of other tasks to a server. Some embodiments are implemented using a high-end UE capable of performing locally all tasks for a standalone usage.

Example embodiments employ an initialization of the session with the retrieval of the configuration parameters, a configuration phase with the exposure of the UE capabilities, and a runtime phase.

Example embodiments use mechanisms defined in 3GPP to transmit data between a User Equipment (UE) and an Application Server (AS), based on the UE capabilities.

Some embodiments hide or remove real elements using a process that includes detecting and masking selected objects, applying an inpainting process to the masked areas, optionally removing shadows of the hidden objects, and rendering the diminished reality scene.

The process of removing shadows includes detecting and masking shadows (associated with hidden objects) and applying an inpainting process to the masked areas.

In example embodiments, the "masking result format" is used to transmit data for object masking and shadow masking.

In example embodiments, the "inpainting result format" is used to transmit data for object inpainting and shadow inpainting.

When rendering the diminished reality scene on the UE, different methods can be applied to hide objects and shadows. In one method, a set of images containing transparent areas and non-transparent areas is used. Non-transparent areas hide real objects and their shadows. There is an image per pose of the UE (INPAINTING_2D in Table 13). In another method, 3D objects are used to hide reals objects and their shadows (INPAINTING_3D in Table 13).

If the information is available, the 3D model of the real scene and the real lights information can be used in some embodiments.

In some embodiments, the labels of the unwanted objects in the scene are received during the initialization phase and exchanged during the configuration phase.

During the configuration phase, various different scenarios may be addressed. The processing task of inpainting may be performed by the server or by the UE. The processing task of shadow removal may be performed by the server or by the UE. The processing task of masking may be done by the server or by the UE. Segmented objects or the entire 3D Model can be requested by the server or by the UE. Light information can be requested by the server or by the UE.

In the initialization phase, the UE or the Application Server receives configuration parameters through a dedicated API or a file (for instance, a scene description file) to be used during the configuration phase.

During the configuration phase, messages are exchanged between the UE and the server to configure the transmission of the data. Messages can be sent either way. In one embodiment, the protocol SIP/SDP (SIP Session Description Protocol, where SIP refers to the Session Initiation Protocol) can be used to exchange messages during this configuration phase.

Configuration messages may include information related, for example, to any of the following:
- The tasks to be performed for the hiding of elements.
- The capabilities of the UE.
- The assignment of the tasks (on UE side or on server side).
- The type of data to be transmitted.
- The frequency at which process will be run.
- An XR Space.
- Initial values (label of objects to hide, label of object for which shadows will be removed).

Some embodiments make use of one configuration message per XRSpace. In some embodiments, configuration messages may be grouped in one array transmitted in one message (if there is more than one XRSpace in the scene).

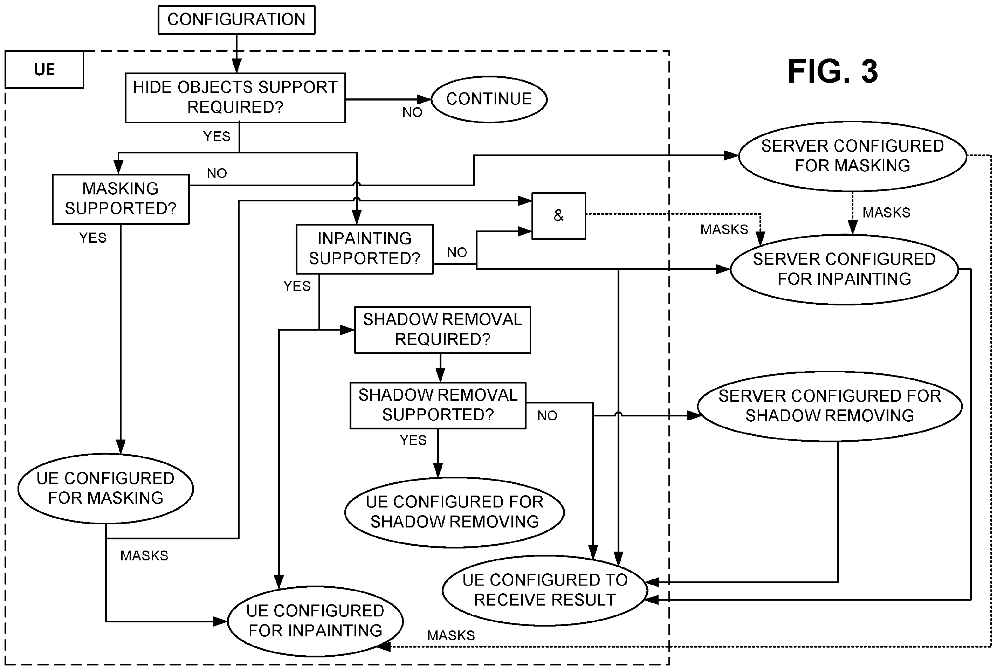

FIG. 3 is a flow diagram illustrating different configurating outcomes that arise in different scenarios for different capabilities of the UE according to an example embodiment.

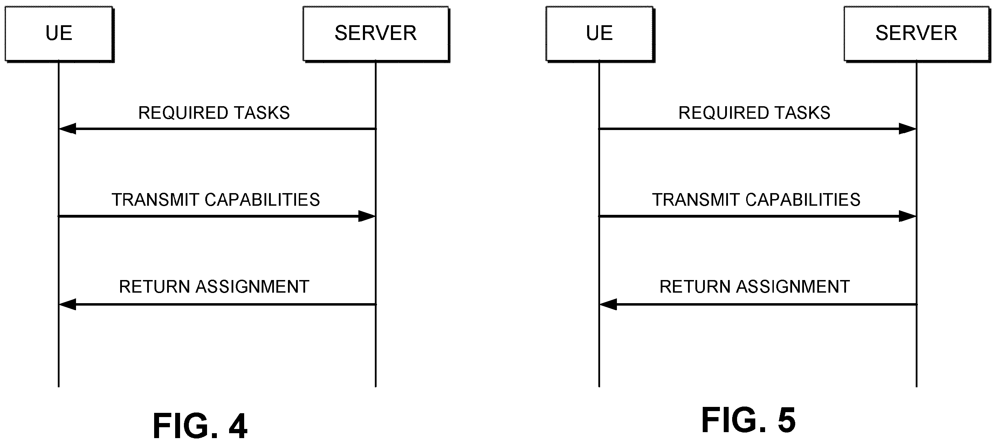

In one embodiment, in a configuration call flow to assign tasks, the server sends a message giving requirements for the hiding of elements in the real scene (Table 1) and the UE replies by exposing its capabilities (Table 2). The server then sends an assignment message to indicate where the functions and the data are located (Table 4). This configuration process can be done during the "downlink delivery session" phase of the 3GPP call flow, shown in FIG. 2. FIG. 4 is a call flow diagram illustrating a configuration call flow in an embodiment in which the server sends the required tasks.

In one embodiment, the UE sends a message giving the for the hiding of elements in the real scene (Table 1) to the server and the UE exposes its capabilities (Table 2). Next, the server sends an assignment message to indicate where functions and data are located (Table 4). This configuration process can be done during the "uplink delivery session" phase of the 3GPP call flow, shown in FIG. 2. FIG. 5 is a call flow diagram illustrating a configuration call flow in an embodiment in which the UE sends the required tasks.

Some embodiments make use of a required tasks message. In an example embodiment, the message includes some or all of the following parameters:
- InpaintingRequired: if true an inpainting function is called for.
- MaskingRequired: if true, masking function is called for.
- ShadowRemovalRequired: if true, shadows removal function is called for.
- 3DModelNeeded: if true, 3DModel of the real environment is to be used for the object hiding tasks.
- LightlnformationNeeded: if true, real lights data is to be used for the shadow removal task.

Table 4 provides an example of a Required Tasks message.

**Table 4: Required Tasks Message**

| **Name** | **Type** | **Cardinality** | **Description** |
|---|---|---|---|
| InpaintingRequired | bool | 1..1 | if true an inpainting function is used |
| MaskingRequired | bool | 1..1 | if true, masking function is used |
| ShadowRemovalRequired | bool | 1..1 | if true, shadows removal function is used |
| 3DModelNeeded | bool | 1..1 | If true, 3DModel of the real environment is provided |
| LightinformationNeeded | bool | 1..1 | if true, real lights data are provided |

Some embodiments make use of a capabilities message sent as a response of the UE to the required tasks message from the server. In an example embodiment, the message includes some or all of the following parameters:
- InpaintingCapable: if true, indicates that the UE can perform inpainting process.
- MaskingCapable: if true, indicates that the UE can perform masking process.
- ShadowRemovalCapable: if true, indicates that the UE can perform shadow removal process.
- 3DModelAvailable: if true, indicates that the UE handles3D Model of real environment (which can be used by the server).
- lightinformationAvailable: if true, indicates that the UE handles real light information (which can be used by the server for shadow removal).

**Table 5: UE Capabilities Message**

| **Name** | **Type** | **Cardinality** | **Description** |
|---|---|---|---|
| InpaintingCapable | bool | 1..1 | If true the UE is capable of handling the inpainting process |
| MaskingCapable | bool | 1..1 | If true, the UE is capable to handle the masking process |
| ShadowRemovalCapable | bool | 1..1 | If true, the UE is capable to handle the shadow removal process |
| 3DModelAvailable | bool | 1..1 | if true, UE handles 3D Model |
| LightinformationAvailable | bool | 1..1 | if true, UE handles light information |
| lf(InpaintingCapable = True){ | | | |
| inpaintingType | enum | | {INPAINTING_2D, INPAINTING_3D}, the type of supported inpainting |
| } | | | |
| If(MaskingCapable =True){ | | | |
| maskingType | enum | 1..1 | {MASKING_2D, MASKING_3D}, the type of supported masking |
| If(maskingType == MASKING_3D){ | | | |
| maskingFormat | enum | 1..1 | {BOUNDING_BOX, VISUAL_MESH}, specifies the supported format of the mask |
| } | | | |
| } | | | |
| If (ShadowRemoval=True) { | | | |
| ShadowRemovalType | enum | 1..1 | {SHADOW_REMOVAL_2D, SHADOW_REMOVAL_3D}, the type of supported shadow removal |
| } | | | |
| If (3DModelAvailable= True) { | | | |
| 3DModelType | enum | | {NON_SEGMENTED, SEGMENTED}, the type of supported 3DModel |
| If (LiqhtlnformationAvailable= True) { | enum | | |
| lightType | | | The type of light handled by the UE, see Table 6 |
| } | | | |

**Table 6: Light types**

| **Enumeration value** | **Description** |
|---|---|
| PointLight | Point Light |
| Spotlight | Spot Light |
| DirectionalLight | Directional |
| Arealight | Area Light |
| EnvLight | Environment Light |

Some embodiments make use of an assignment message, which may be sent from the server to the UE. An assignment message may have some or all of the following parameters.
- InpaintingAssignment: indicates where the inpainting process will be processed.
- MaskingAssignment: indicates where the masking will be processed.
- ShadowRemovalAssignment: optionally indicates where the shadow removal will be launched.
- 3DModelAvailable: optionally indicates the owner of the 3DModel of the real environment.
- LightlnformationAvailable: optionally indicates the owner of the real light data.

**Table 7: Assignment Message**

| **Name** | **Type** | **Cardinality** | **Description** |
|---|---|---|---|
| InpaintingAssignment | string | 1..1 | Either" UE" or "AS" to indicate where the inpainting process is done |
| MaskingAssignment | string | 0..1 | Either "UE" or "AS" to indicate where the masking process is done |
| ShadowRemovalAssignment | string | 0..1 | Either "UE" or "AS" to indicate where the shadow removal process is done |
| 3DModelAssignment | string | 0..1 | Either "UE" or "AS" to indicate where the 3DModel of the real environment is located |
| LightinformationAssignment | string | 0..1 | Either "UE" or "AS" to indicate where the light information is available |

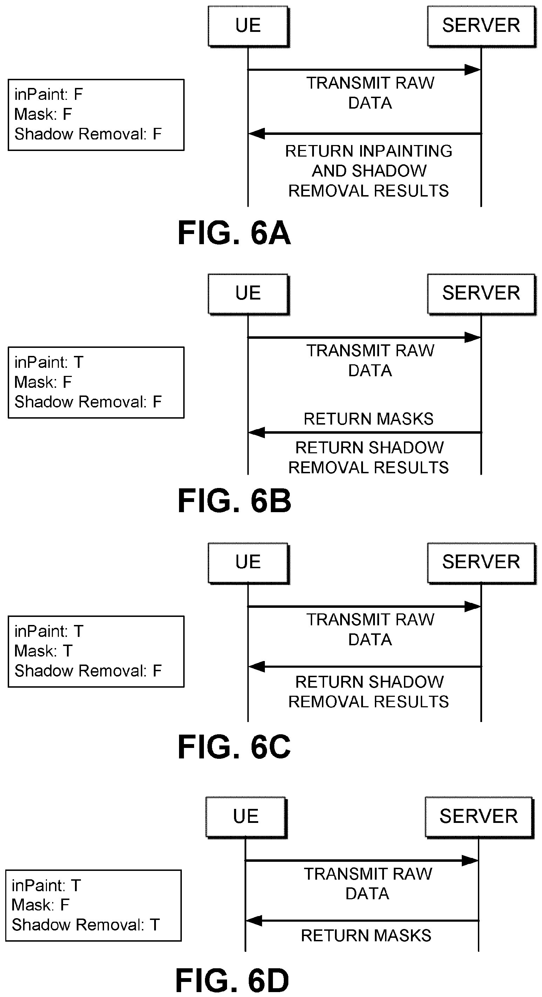

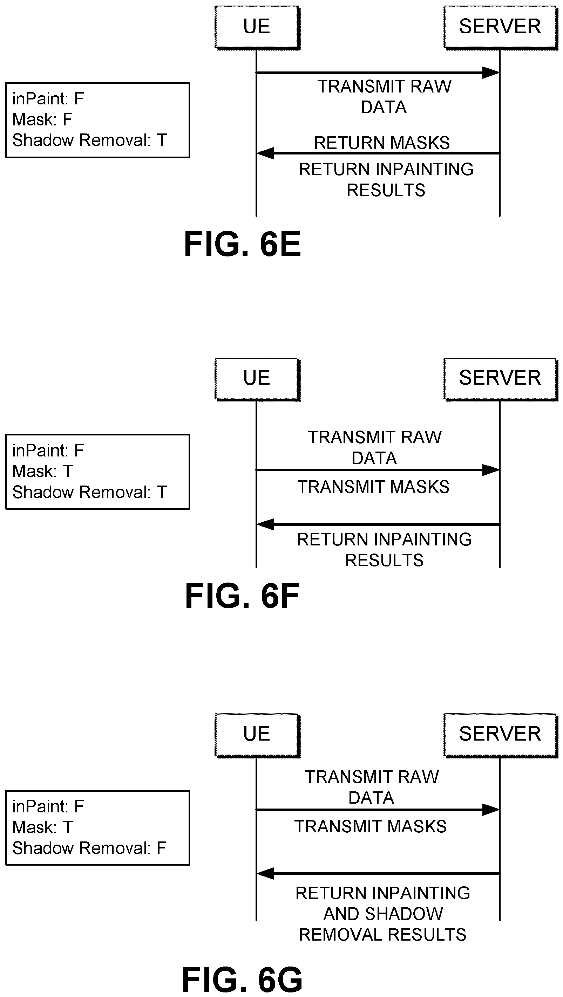

In example embodiments, the data formats are negotiated between the UE and server. This may include defining common XR spaces and defining the format of the data that are transmitted during the runtime step, as seen in FIG. 6. Using an XRSpace format, an ID is used to define an XRSpace.

In example embodiments, intrinsics parameters (camera) are known by the server, e.g. through other parts of initialization not detailed in the present disclosure.

In example embodiments, images and additional sensor data may be used to compute the hiding of real objects in the scene. Images and other sensor data may be referred to herein as raw data. Example formats described herein are extensible to support the exchange of additional/future raw data. This configuration message may be in JSON format. This message may include an XRSpace.

As an example, in SR_MSE (TS 26.565), the message can be identified by an urn: "urn:3gpp:xxxxxx-:xx: configurerawdata".

The following is an example of a json schema of raw data.

```
 Example: "texture": {
             "type": "image",
             "cardinality": "1..1"
             },
         "view pose":{
             "type": "array",
             "contains":{
             "type":"float"},
             "minContains":16,
             "maxContains": 16,
             "cardinality": "1..1"
             },
```

Table 8 provides an example of a message for conveying the format of raw data.

**Table 8: Raw Data Format**

| **Name** | **Format** | **Cardinality** | **Description** |
|---|---|---|---|
| XRSpaceFormat | ID | 1..1 | Format of XRSpace used to express the 3D coordinates of the pose |
| RawDataFormats | Array | 1..1 | A set of raw data formats used by the server to perform tasks for the hiding/removal of real objects |
| RawDataObjectFormat | Object | 1..n | Format of RawData defined in Table 9 |
| DepthDataFormat | Array of 3D points (or mesh) | 0..1 | Format of Depth Data. The depth data (from lidar for example) |

Table 9 provides an example of a message for conveying the format of raw data objects.

**Table 9: RawData Object Format**

| **Name** | **Format** | **Cardinality** | **Description** |
|---|---|---|---|
| ImageFormat | Texture | 1..1 | Format of the image of the real environment (can be done from one image or from a set of images) |
| ViewPoseFormat | Array (16 floats) | 1..1 | Format of view pose, representing the pose of the camera relative to an xrSpace. |
| Size | Vec2 | 1..1 | Format of the size of the texture |
| CapturTimestampFor mat | String or number | 1..1 | Format of the timestamp. This timestamp is associated to image capture. It can be a string (date:time AAAA:MM:JJ:HH:MN:SS:MS) or a number |
| DepthFormat | Texture | 0..1 | Format of the depth map (gray level) |

A masking result format configuration message may be used to describe the masking result format. It may be in JSON format. This message may include an XRSpace. In an example, the message can be identified by an urn: "urn:3gpp:xxxxxx-:xx:configuremasking".

An example is as follows.

```
         "3DMaskedObject":{
             "type": "array",
             "contains":{
             "format":"3DMaskingObjectFormat"},
             "cardinality": "1..1"
             },
```

Table 10 gives an example of a message for conveying the format of masking results.

**Table 10: Masking Result Format**

| **Name** | **Format** | **Cardinality** | **Description** |
|---|---|---|---|
| XRrSpaceFormat | ID | 1..1 | Format of the XRSpace used to express the masking result |
| If(MaskingType == MASKING 3D){ | | | |
| 3DObjetsFormat | Array | 1..1 | Format of the set of 3D Masking objects |
| 3DMaskingObjectFormat | Object | 0..n | Format of 3DMaskingObject defined in Table 11 |
| } | | | |
| If(MaskingType == MASKING 2D){ | | | |
| 2DMaskingObjectFormat | | | Format of 2DMaskingObject defined in Table 12 |
| } | | | |
| } | | | |

Table 11 gives an example of a message for conveying the format of 3D masking objects.

**Table 11: 3D Masking Object Format**

| **Name** | **Format** | **Cardinality** | **Description** |
|---|---|---|---|
| 3DMaskFormat | Mesh | | Format of the 3D Mask |
| MaskingTimestampFormat | String or number | 0..1 | Format of the timestamp (associated to masking process). Time information can be a string (date:time AAAA:MM:JJ:HH:MN:SS:MS) or a number |

Table 12 gives an example of a message for conveying the format of 2D masking objects.

**Table 12: 2D Masking Object Format**

| **Name** | **Format** | **Cardinality** | **Description** |
|---|---|---|---|
| imageFormat | Texture | 1..1 | Format of 2D Mask |
| ViewPoseFormat | Array (16 floats) | 0..1 | Format of the view poses. It's the pose of the camera relative to an xrSpace. In one embodiment pose can be extracted from a set of images. |
| Size | Vec2 | 1..1 | Format of the size of the texture |
| MaskingTimestampFormat | String or number | 1..1 | Format of the timestamp (associated to image capture). Time information can be a string (date:time AAAA:MM:JJ:HH:MN:SS:MS) or a number |

An inpainting results format configuration message may be used to describe the Inpainting result format. It may be in JSON format. This message may include an XRSpace. The same message may be used for shadow removal result. In an example, the message can be identified by an urn: "urn:3gpp:xxxxxx-:xx:configureinpaintingresult".

An example is as follows:

```
         ...
         "3DObjects":{
             "type": "array",
             "contains":{
             "format":" 3DlnpaintingObjectFormat"},
             "cardinality": "1..1"
             },
```

Table 13 gives an example of a message for conveying the format of inpainting results.

**Table 13: Inpainting Result Format**

| **Name** | **Format** | **Cardinality** | **Description** |
|---|---|---|---|
| XRSpaceFormat | ID | 1..1 | Format of the XRSpace used to express the inpainting result |
| If(inpainttingType ==INPAINTING_3D){ | | | |
| 3DObjetsFormats | Array | | Format of the set of 3D inpainting objects |
| 3DInpaintingObjectFormat | Object | 0..n | Format of 3DlnpaintingObject defined in Table 14 |
| } | | | |
| If(inpaintingType == INPAINTING_2D){ | | | |
| 2DInpaintingObjectFormat | | 1..1 | Format of 2DInpaintingObject described in Table 15 |
| } | | | |

In some embodiments, if available, bounding boxes for hidden objects may be transmitted with the inpainting result. Primitive shapes may be used to describe the bounding box. Using the bounding box, the UE would be able to handle collisions with hidden objects. Bounding boxes may be an option of the "Required tasks" message.

Table 14 gives an example of a message for conveying the format of a 3D inpainting object.

**Table 14: 3D Inpainting Object Format**

| **Name** | **Format** | **Cardinality** | **Description** |
|---|---|---|---|
| InpaintingResultFormat | Mesh | 1..1 | Format of the inpainting object |
| InpaintinglmageFormat | Texture | 1..1 | Format of the image associated to the inpainting object |
| size | Vec2 | 1..1 | Format of the size of the texture |
| InpaintingTtimestampFormat | string or number | 0..1 | Format of the timestamp (associated to inpainting process). Time information can be a string (date:time AAAA:MM:JJ:HH:MN:SS:MS) or a number |

For the 2D format, an image corresponding to the diminished XR scene is transmitted. This image may then be rendered by the UE display.

Table 15 gives an example of a message for conveying the format of a 2D inpainting object.

**Table 15: 2D Inpainting Object Format**

| **Name** | **Format** | **Cardinality** | **Description** |
|---|---|---|---|
| ImageFormat | Texture | 1..1 | Format of the image of the inpainting object |
| ViewPoseFormat | Array (16 floats) | 1..1 | Format of view poses. It's the pose of the camera relative to an xrSpace. |
| | | | |
| InpaintingTtimestam pFormat | string or number | 1..1 | Format of the timestamp (associated to inpainting process). Time information can be a string (date:time AAAA:MM:JJ:HH:MN:SS:MS) or a number |

Configuration parameters received during the initialization phase may be related to some or all of the following:
- The selection of objects to hide.
- The selection of shadow to remove.
- The refresh occurrence.

For the selection of real objects to hide, they are present in the scanned scene. In some cases, it is easier to specify the objects that will be displayed (displayedObjects), other will be hidden. This may also apply to the shadows to remove. The objects to be hidden may then be all the objects of the scene except for the objects identified to be displayed, as reflected symbolically in the following:$\left[ObjectsToHide\right] = \left[AllObjectsOfTheScene\right] - \left[displayedObjects\right]$

The refresh occurrence is a value specifying when the results and the masking are to be updated (inpainting, masking, shadow removal). The refresh occurrence may be set during the configuration process and/or it may be updated during the runtime. The refresh occurrence n is an enum variable, as reflected in Table 17. This occurrence value is considered in all call flows of FIG. 6. Occurrence can be logically combined.

This configuration message may be in JSON format. For example, the message may be identified by an urn: "urn:3gpp:xxxxxx-:xx:configurewithinitparameters". An example is as follows.

```
         "RefreshOccurrence": Once,
         "displayedObjects": ["Table", "Chairs"],
```

Table 16 gives an example of a configuration message with parameters from an initialization phase.

**Table 16: Configuration message with parameters from initialization step**

| **Name** | **Type** | **Cardinality** | **Description** |
|---|---|---|---|
| XRSpace | ID | 1..1 | Unique identifier of the XRSpace |
| RefreshOccurrence | enum | 1..1 | See Table 17 |
| If (RefreshOccurrence = EVERY_N_FRAMES){ | | | |
| N | Number | 1..1 | The value of N |
| } | | | |
| If (RefreshOccurrence = EVENT_BASED){ | | | |
| Event | ID | 1..1 | ID of the Event (used to trigger the refresh process) |
| } | | | |
| displayedObjects | Array | 1..1 | Set of labels. |
| displayedObject | string | | label of objects to display during rendering process |
| shadowDisplayedObjects | Array | 1..1 | Set of labels |
| shadowRendered-Object | string | | label of shadow to display during rendering process |

Table 17 gives an example of values that may be used to indicate the refresh occurrence.

**Table 17: Refresh Occurrence**

| **Refresh occurrence** | **Description** |
|---|---|
| NONE = 0 | Supposed to be static |
| EVERY_FRAME = 1 | Refresh every frame |
| EVERY_N_FRAMES = 2 | Refresh every N frame |
| EVENT_BASED = 3 | Refresh when an event occurs. The events are managed by the application. |

In example embodiments, messages conveying 3D model information may use a format as represented above in Table 1. Messages conveying segmented 3D model information may be used with a Segmented3DModel format as described above in Table 2. Messages conveying light information may be used with a format as described above in Table 3.

In a runtime phase, values are transmitted using the formats and parameters described above with respect to the configuration phase. Depending on the configuration, FIGs. 6A-6G illustrate different call flows at runtime between UE and server in a case where the functions of inpainting, masking and shadow removal are all used.

In cases where inPaint is true (T), as in FIGs. 6B, 6C, 6D, inpainting is done by the UE. In cases where inPaint is false (F), as in FIGs. 6A, 6E, 6F, and 6G, inpainting is done by the server.

In cases where Mask is true (T), as in FIGs. 6C, 6F, and 6G, masking (2D or 3D) is done by the UE. In cases where Mask is false (F), as in FIGs. 6A, 6B, 6D, and 6E masking is done by the server.

In cases where Shadow Removal is true (T), as in FIGs. 6D, 6E, and 6F, shadow removal is done by the UE. In cases where Shadow Removal is false (F), as in FIGs. 6A, 6B, 6C, and 6F, shadow removal is done by the server.

Different embodiments may use different formats for transmission of raw data values between the UE and the server. For example, in SR_MSE (TS 26.565), the message can be identified by an urn: "urn:3gpp:xxxxxx-:xx:rawdata".

During runtime, the value of the parameter is transmitted. The message may be in JSON format. The following is an example format.

```
 "texture": {
                   "sampler" : 0,
             "source" : 0},
         "view pose": [1.0,0.0,0.0,2.0,0.0,1.0,0.0,-1.2,0.0,0.0,1.0,2.3,0.0,0.0,0.0,1.0],
```

The payload of the message may be as shown in Table 18.

**Table 18: Raw Data value**

| **Name** | **Value** | **Cardinality** | **Description** |
|---|---|---|---|
| xrSpace | ID | 1..1 | ID of the XRSpace used to express the 3D coordinates of the pose |
| RawDatas | Array | 1..1 | Array of RawData |
| RawData | Object | | Values corresponding to the RawData format of Table 6 |

In one embodiment, depth data can be transmitted using a format such as that as described above in Table 5.

Depending on the configuration process, the client or the XR device (UE) transmits mask data. For example, in SR_MSE (TS 26.565), the message can be identified by an urn: "urn: 3gpp:xxxxxx-:xx: masking".

During runtime, the value of the parameter is transmitted. The message may be in JSON format. For 3D masking, the payload of the message may be as shown in Table 19.

**Table 19: 3D Masking Value**

| **Name** | **Value** | **Cardinality** | **Description** |
|---|---|---|---|
| XRSpace | ID | 1..1 | ID of the XRSpace used to express the 3D coordinates of 3d Model |
| 3DObjets | Array | | Array of 3D objects |
| 3DMaskingObject | Object | 0..n | Values corresponding to the 3DMaskingObject format of Table 11 |

For 2D masking, the payload of the message may be as shown in Table 20.

**Table 20: 2D Masking Value**

| **Name** | **Value** | **Cardinality** | **Description** |
|---|---|---|---|
| XRSpace | ID | 1..1 | ID of the XRSpace used to express the 3D coordinates of 3d Model |
| 2DMaskingObject | Object | 1..1 | Values corresponding to the 2DMaskingObject format of Table 12 |

Different embodiments may use different formats for the transmission of an inpainting object. For example, in SR_MSE (TS 26.565), the message can be identified by an urn: "urn:3gpp:xxxxxx-:xx:InpaintingObject". During runtime, the value of the parameter is transmitted. The message may be in JSON format. The same message may be used for the shadow removal result.

For a 3D inpainting object, the payload of the message may have a format as described in Table 21.

**Table 21: 3D Inpainting Object Value**

| **Name** | **Value** | **Cardinality** | **Description** |
|---|---|---|---|
| XRSpace | ID | 1..1 | ID of the XRSpace used to express the 3D coordinates of 3D Model |
| 3DObjets | Array | | Array of 3D objects |
| 3DInpaintingObject | Object | 0..n | Values corresponding to the 3DInpaintingObject format of Table 11. |

For a 2D inpainting object, the payload of the message may be as described in Table 22.

**Table 22: 2D Inpainting Object Value**

| **Name** | **Value** | **Cardinality** | **Description** |
|---|---|---|---|
| XRSpace | ID | 1..1 | ID of the XRSpace used to express the 3D coordinates of 3d Model |
| 2DInpaintingObject | Object | 0..n | Values corresponding to the2DInpaintingObject of Table 12 |

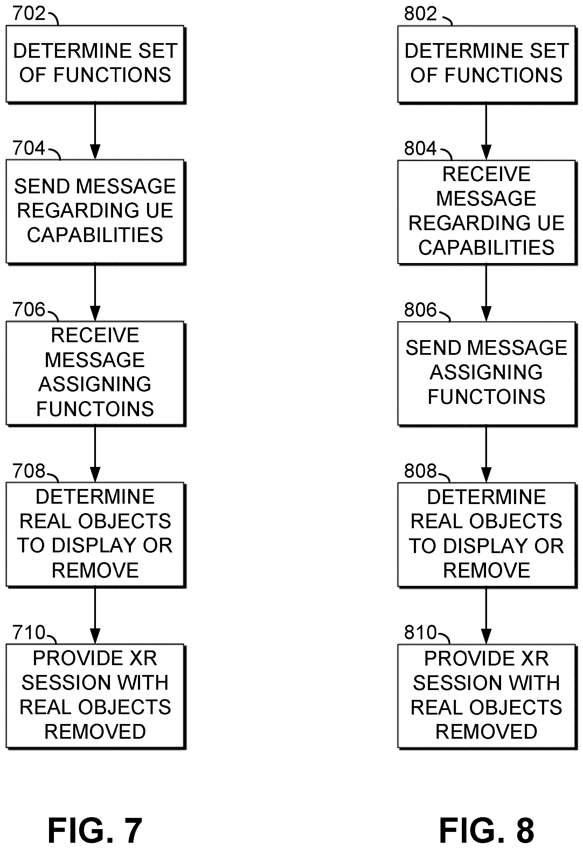

FIG. 7 is a flow chart illustrating a method performed at an extended reality, XR, user equipment, UE, according to some embodiments. At 702, in communication with an application server, a set of functions to be performed in an extended reality session is determined. The set of functions may include at least one of an inpainting function, a masking function, and a shadow removal function. The set of functions may optionally include one or more other functions such as providing light data representing real light information in the scene and/or providing 3D model data of a real environment. The selection of at least one function may include a selection of at least two functions, at least three functions, and so on, as called for in the relevant embodiment.

In some embodiments, the determining of the set of functions includes sending a required tasks message from the UE, the required tasks message including a Boolean value indicating, for each of a plurality of available functions, whether the respective available function is included in the set of functions to be performed in the extended reality session. In other embodiments, the determining of the set of functions includes receiving a required tasks message from the server, the required tasks message including a Boolean value indicating, for each of a plurality of available functions, whether the respective available function is included in the set of functions to be performed in the extended reality session. The available functions may include, for example, inpainting, masking, shadow removal, providing a 3D model of the real environment, or providing light information regarding lighting in the real environment.

At 704, the UE sends to the application server a capabilities message indicating, for each of the functions in the set of functions, whether the UE has a capability to perform the respective function. At 706, the UE receives, from the application server, an assignment message indicating, for each of the functions of the set of functions, whether the UE or the application server is assigned to perform the respective function.

At 708, in communication with the application server, a determination is made of a set of real objects to be removed from a scene. While this determination is illustrated in FIG. 7 as occurring after step 706, in different embodiments, the determination may alternatively be made at an earlier stage. In some cases, determining a set of real objects to be removed from the scene comprises communicating, between the UE and the server, labels of those real objects that are to be displayed in the scene. The real objects to be removed from the scene are then determined to be the objects in the scene other than the objects to be displayed.

At 710, the UE provides an extended reality session in which the determined set of objects are removed from the scene. In providing the session, the functions in the set of functions are performed either by the UE or by the server according to the assignment message communicated at 706.

FIG. 8 is a flow chart illustrating a method performed at an extended reality, XR, application server. At 802, in communication with a user equipment, UE, a set of functions to be performed in an extended reality session is determined. The set of functions includes at least one of an inpainting function, a masking function, and a shadow removal function.

In some embodiments, the determining of the set of functions includes receiving a required tasks message from the UE, the required tasks message including a Boolean value indicating, for each of a plurality of available functions, whether the respective available function is included in the set of functions to be performed in the extended reality session. In other embodiments, the determining of the set of functions includes sending a required tasks message to the UE, the required tasks message including a Boolean value indicating, for each of a plurality of available functions, whether the respective available function is included in the set of functions to be performed in the extended reality session.

At 804, the server receives, from the UE, a capabilities message indicating, for each of the functions in the set of functions, whether the UE has a capability to perform the respective function. At 806, the server sends, to the UE, an assignment message indicating, for each of the functions of the set of functions, whether the UE or the application server is assigned to perform the respective function.

At 808, in communication with the UE, a determination is made of a set of real objects to be removed from a scene. While this determination is illustrated in FIG. 8 as occurring after step 806, in different embodiments, the determination may alternatively be made at an earlier stage. In some cases, determining a set of real objects to be removed from the scene comprises communicating, between the UE and the server, labels of those real objects that are to be displayed in the scene. The real objects to be removed from the scene are then determined to be the objects in the scene other than the objects to be displayed.

At 810, an extended reality session is provided in which the determined set of objects are removed from the scene. In providing the session, the functions in the set of functions are performed either by the UE or by the server according to the assignment message communicated at 806.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

### Example Systems

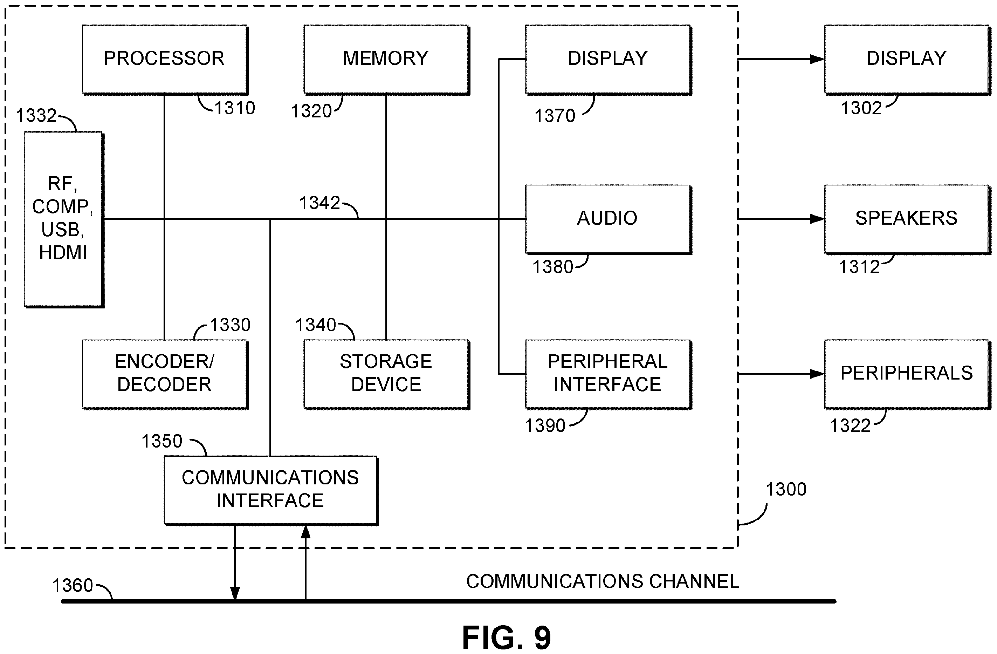

Some embodiments may be implemented on a system of one or more processors as illustrated in FIG. 9. FIG. 9 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The **RF** portion of various embodiments includes one or more elements to perform these functions, for example, frequency selectors, signal selectors, band-limiters, channel selectors, filters, downconverters, demodulators, error correctors, and demultiplexers. The **RF** portion can include a tuner that performs various of these functions, including, for example, downconverting the received signal to a lower frequency (for example, an intermediate frequency or a near-baseband frequency) or to baseband. In one set-top box embodiment, the **RF** portion and its associated input processing element receives an **RF** signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements between existing elements, such as, for example, inserting amplifiers and an analog-to-digital converter. In various embodiments, the **RF** portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further Embodiments

In some embodiments, a method performed at an extended reality, XR, user equipment, UE, comprises: in communication with an application server, determining a set of functions to be performed in an extended reality session, the set of functions including at least one of an inpainting function, a masking function, and a shadow removal function; sending, from the UE to the application server, a capabilities message indicating, for each of the functions in the set of functions, whether the UE has a capability to perform the respective function; receiving, from the application server, an assignment message indicating, for each of the functions of the set of functions, whether the UE or the application server is assigned to perform the respective function; in communication with the application server, determining a set of objects to be removed from a scene; and providing an extended reality session in which the determined set of objects are removed from the scene, the functions of the set of functions being performed according to the assignment message.

An extended reality, XR, user equipment, UE, apparatus according to some embodiments comprises one or more processors configured to perform at least: in communication with an application server, determining a set of functions to be performed in an extended reality session, the set of functions including at least one of an inpainting function, a masking function, and a shadow removal function; sending, from the UE to the application server, a capabilities message indicating, for each of the functions in the set of functions, whether the UE has a capability to perform the respective function; receiving, from the application server, an assignment message indicating, for each of the functions of the set of functions, whether the UE or the application server is assigned to perform the respective function; in communication with the application server, determining a set of objects to be removed from a scene; and providing an extended reality session in which the determined set of objects are removed from the scene, the functions of the set of functions being performed according to the assignment message.

In some embodiments, the determining of the set of functions comprises sending a required tasks message from the UE to the server, the required tasks message including a Boolean value indicating, for each of a plurality of available functions, whether the respective available function is included in the set of functions to be performed in the extended reality session.

In some embodiments, the determining of the set of functions comprises receiving a required tasks message from the server at the UE, the required tasks message including a Boolean value indicating, for each of a plurality of available functions, whether the respective available function is included in the set of functions to be performed in the extended reality session.

In some embodiments, the set of functions further includes providing light data representing real light information in the scene or providing 3D model data of a real environment.

In some embodiments, determining a set of objects to be removed from the scene comprises communicating, between the UE and the server, labels of objects to be displayed in the scene, the objects to be removed from the scene being objects in the scene other than the objects to be displayed.

In some embodiments, the set of functions includes at least the inpainting function and the masking function, the UE performs one of the inpainting and masking functions, and the application server performs the other of the inpainting and masking functions.

Some embodiments further comprise communicating at least one of mask data and inpainting data between the UE and the server.

In some embodiments of a method performed at an extended reality, XR, application server, the method comprises: in communication with a user equipment, UE, determining a set of functions to be performed in an extended reality session, the set of functions including at least one of an inpainting function, a masking function, and a shadow removal function; receiving, from the UE, a capabilities message indicating, for each of the functions in the set of functions, whether the UE has a capability to perform the respective function; sending, to the UE, an assignment message indicating, for each of the functions of the set of functions, whether the UE or the application server is assigned to perform the respective function; in communication with the UE, determining a set of objects to be removed from a scene; and providing an extended reality session in which the determined set of objects are removed from the scene, the functions of the set of functions being performed according to the assignment message.

In some embodiments, an extended reality, XR, application server apparatus comprises one or more processors configured to perform at least: in communication with a user equipment, UE, determining a set of functions to be performed in an extended reality session, the set of functions including at least one of an inpainting function, a masking function, and a shadow removal function; receiving, from the UE, a capabilities message indicating, for each of the functions in the set of functions, whether the UE has a capability to perform the respective function; sending, to the UE, an assignment message indicating, for each of the functions of the set of functions, whether the UE or the application server is assigned to perform the respective function; in communication with the UE, determining a set of objects to be removed from a scene; and providing an extended reality session in which the determined set of objects are removed from the scene, the functions of the set of functions being performed according to the assignment message.

In some embodiments, the determining of the set of functions comprises receiving a required tasks message from the UE, the required tasks message including a Boolean value indicating, for each of a plurality of available functions, whether the respective available function is included in the set of functions to be performed in the extended reality session.

In some embodiments, the determining of the set of functions comprises sending a required tasks message to the UE, the required tasks message including a Boolean value indicating, for each of a plurality of available functions, whether the respective available function is included in the set of functions to be performed in the extended reality session.

In some embodiments, the set of functions further includes providing light data representing real light information in the scene or providing 3D model data of a real environment.

In some embodiments, determining a set of objects to be removed from the scene comprises communicating, between the UE and the server, labels of objects to be displayed in the scene, the objects to be removed from the scene being objects in the scene other than the objects to be displayed.

In some embodiments, the set of functions includes at least the inpainting function and the masking function, and one of the inpainting or masking functions is performed by the UE, and the other of the inpainting or masking functions is performed by the application server.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method performed at an extended reality, XR, user equipment, UE, the method comprising:
in communication with an application server, determining a set of functions to be performed in an extended reality session, the set of functions including at least one of an inpainting function, a masking function, and a shadow removal function;
sending, from the UE to the application server, a capabilities message indicating, for each of the functions in the set of functions, whether the UE has a capability to perform the respective function;
receiving, from the application server, an assignment message indicating, for each of the functions of the set of functions, whether the UE or the application server is assigned to perform the respective function;
in communication with the application server, determining a set of objects to be removed from a scene; and
providing an extended reality session in which the determined set of objects are removed from the scene, the functions of the set of functions being performed according to the assignment message.

2. An extended reality, XR, user equipment, UE, apparatus comprising one or more processors configured to perform at least:
in communication with an application server, determining a set of functions to be performed in an extended reality session, the set of functions including at least one of an inpainting function, a masking function, and a shadow removal function;
sending, from the UE to the application server, a capabilities message indicating, for each of the functions in the set of functions, whether the UE has a capability to perform the respective function;
receiving, from the application server, an assignment message indicating, for each of the functions of the set of functions, whether the UE or the application server is assigned to perform the respective function;
in communication with the application server, determining a set of objects to be removed from a scene; and
providing an extended reality session in which the determined set of objects are removed from the scene, the functions of the set of functions being performed according to the assignment message.

3. The method of claim 1 or the apparatus of claim 2, wherein the determining of the set of functions comprises sending a required tasks message from the UE to the server, the required tasks message including a Boolean value indicating, for each of a plurality of available functions, whether the respective available function is included in the set of functions to be performed in the extended reality session.

4. The method of claim 1 or the apparatus of claim 2, wherein the determining of the set of functions comprises receiving a required tasks message from the server at the UE, the required tasks message including a Boolean value indicating, for each of a plurality of available functions, whether the respective available function is included in the set of functions to be performed in the extended reality session.

5. The method of claim 1, or claims 3-4 as they depend from claim 1, or the apparatus of claim 2, or claims 3-4 as they depend from claim 2, wherein the set of functions further includes providing light data representing real light information in the scene or providing 3D model data of a real environment.

6. The method of claim 1, or claims 3-5 as they depend from claim 1, or the apparatus of claim 2, or claims 3-5 as they depend from claim 2, wherein determining a set of objects to be removed from the scene comprises communicating, between the UE and the server, labels of objects to be displayed in the scene, the objects to be removed from the scene being objects in the scene other than the objects to be displayed.

7. The method of claim 1, or claims 3-6 as they depend from claim 1, or the apparatus of claim 2, or claims 3-6 as they depend from claim 2, wherein the set of functions includes at least the inpainting function and the masking function, and wherein the UE performs one of the inpainting or masking functions, and the application server performs the other of the inpainting or masking functions.

8. The method of claim 1, or claims 3-4 as they depend from claim 1, or the apparatus of claim 2, or claims 3-4 as they depend from claim 2, further comprising communicating at least one of mask data and inpainting data between the UE and the server.

9. A method performed at an extended reality, XR, application server, the method comprising:
in communication with a user equipment, UE, determining a set of functions to be performed in an extended reality session, the set of functions including at least one of an inpainting function, a masking function, and a shadow removal function;
receiving, from the UE, a capabilities message indicating, for each of the functions in the set of functions, whether the UE has a capability to perform the respective function;
sending, to the UE, an assignment message indicating, for each of the functions of the set of functions, whether the UE or the application server is assigned to perform the respective function;
in communication with the UE, determining a set of objects to be removed from a scene; and
providing an extended reality session in which the determined set of objects are removed from the scene, the functions of the set of functions being performed according to the assignment message.

10. An extended reality, XR, application server apparatus comprising one or more processors configured to perform at least:
in communication with a user equipment, UE, determining a set of functions to be performed in an extended reality session, the set of functions including at least one of an inpainting function, a masking function, and a shadow removal function;
receiving, from the UE, a capabilities message indicating, for each of the functions in the set of functions, whether the UE has a capability to perform the respective function;
sending, to the UE, an assignment message indicating, for each of the functions of the set of functions, whether the UE or the application server is assigned to perform the respective function;
in communication with the UE, determining a set of objects to be removed from a scene; and
providing an extended reality session in which the determined set of objects are removed from the scene, the functions of the set of functions being performed according to the assignment message.

11. The method of claim 9 or the apparatus of claim 10, wherein the determining of the set of functions comprises receiving a required tasks message from the UE, the required tasks message including a Boolean value indicating, for each of a plurality of available functions, whether the respective available function is included in the set of functions to be performed in the extended reality session.

12. The method of claim 9 or the apparatus of claim 10, wherein the determining of the set of functions comprises sending a required tasks message to the UE, the required tasks message including a Boolean value indicating, for each of a plurality of available functions, whether the respective available function is included in the set of functions to be performed in the extended reality session.

13. The method of claim 9, or claims 11-12 as they depend from claim 9, or the apparatus of claim 10, or claims 11-12 as they depend from claim 10, wherein the set of functions further includes providing light data representing real light information in the scene or providing 3D model data of a real environment.

14. The method of claim 9, or claims 11-13 as they depend from claim 9, or the apparatus of claim 10, or claims 11-13 as they depend from claim 10, wherein determining a set of objects to be removed from the scene comprises communicating, between the UE and the server, labels of objects to be displayed in the scene, the objects to be removed from the scene being objects in the scene other than the objects to be displayed.

15. The method of claim 9, or claims 11-14 as they depend from claim 9, or the apparatus of claim 10, or claims 11-14 as they depend from claim 10, wherein the set of functions includes at least the inpainting function and the masking function, and wherein one of the inpainting or masking functions is performed by the UE, and the other of the inpainting or masking functions is performed by the application server.
